# EUROPEAN PATENT APPLICATION

(11) **EP 4 586 592 A1**
(43) Date of publication of application: **16.07.2025**
(21) Application number: 23917864.3
(22) Date of filing: 08.11.2023
(51) Int. Cl.: H04L 69/08, F24F 11/54, F24F 11/65, F24F 120/20

(54) **AIR CONDITIONER, AIR CONDITIONER CONTROLLER, CONTROL METHOD OF AIR CONDITIONER, AND COMPUTER-READABLE RECORDING MEDIUM**

(30) Priority: 19.01.2023 KR 20230008338
(71) Applicant: Samsung Electronics Co., Ltd., Suwon-si, Gyeonggi-do 16677 (KR)
(72) Inventor: HA, Manki, Suwon-si Gyeonggi-do 16677 (KR); HAN, Daechul, Suwon-si Gyeonggi-do 16677 (KR); KIM, Youngjin, Suwon-si Gyeonggi-do 16677 (KR); PARK, Jonghoon, Suwon-si Gyeonggi-do 16677 (KR); YOUN, Kongsik, Suwon-si Gyeonggi-do 16677 (KR); JANG, Seokhyun, Suwon-si Gyeonggi-do 16677 (KR); CHO, Ilyong, Suwon-si Gyeonggi-do 16677 (KR); HUR, Jaehun, Suwon-si Gyeonggi-do 16677 (KR)
(74) Representative: Gulde & Partner
(86) International application number: PCT/KR2023/017870
(87) International publication number: WO 2024/154910

(57) **Abstract**

An air conditioner may include an indoor controller configured to receive an operation command from a user, and generate a plurality of first communication signals corresponding to the operation command; and outdoor unit; and a main controller configured to connect to the indoor controller and the outdoor unit,, receive the plurality of first communication signals, convert the plurality of first communication signals into a single second communication signal by combining the plurality of first communication signals and transmit the single second communication signal to the outdoor unit to control operation of the outdoor unit, wherein the outdoor unit is configured to receive the single second communication signal, and operate based on the single second communication signal.

## Description

### [Technical Field]

The disclosure relates to an air conditioner and a method for controlling the same.

### [Background Art]

Air conditioners are devices for conditioning air in indoor spaces by using transfer of heat produced by evaporation and condensation of a refrigerant to cool or heat the air and to discharge the cooled or heated air. The air conditioner may circulate the refrigerant through a compressor, an indoor heat exchanger and an outdoor heat exchanger during cooling or heating operation, and cool or heat the indoor space by discharging the air that has exchanged heat in the indoor heat exchanger into the indoor space.

An air conditioner may include an indoor controller generating contact signals, and may control cooling and heating based on the contact signals input through the indoor controller. However, external input devices such as existing indoor controllers have limitations in being compatible with outdoor units with improved energy efficiency.

### [Disclosure]

### [Technical Problem]

The disclosure is directed to providing an air conditioner, an apparatus for controlling the same, a method for controlling the same, and a computer-readable recording medium that may allow an outdoor unit to be replaced with an outdoor unit with improved energy efficiency without replacing an indoor controller and an indoor unit.

Technical objects that may be achieved by the disclosure are not limited to the above-mentioned object, and other technical objects not mentioned will be clearly understood by one of ordinary skill in the technical art to which the disclosure belongs from the following description.

### [Technical Solution]

According to an embodiment, an air conditioner may include an indoor controller configured to receive an operation command from a user, and generate a plurality of first communication signals corresponding to the operation command. The air conditioner may include a main controller configured to connect to the indoor controller, receive the plurality of first communication signals, and convert the plurality of first communication signals into a single second communication signal by combining the plurality of first communication signals. The air conditioner may include an outdoor unit configured to connect to the main controller, receive the single second communication signal, and operate based on the single second communication signal.

According to an embodiment, an apparatus for controlling an air conditioner may include an indoor unit connection terminal configured to be connected to an indoor unit. The apparatus may include an outdoor unit connection terminal configured to be connected to an outdoor unit. The apparatus may include an indoor controller connection terminal configured to be connected to an indoor controller configured to obtain an operation command from a user and generate a plurality of first communication signals corresponding to the operation command. The apparatus may include a controller configured to convert the plurality of first communication signals into a single second communication signal, and transmit the single second communication signal to the outdoor unit.

According to a method for controlling an air conditioner according to an embodiment, an indoor controller may receive an operation command from a user, and generate a plurality of first communication signals corresponding to the operation command. A main controller connected to the indoor controller may receive the plurality of first communication signals, and convert the plurality of first communication signals into a single second communication signal by combining the plurality of first communication signals. An outdoor unit connected to the main controller may receive the single second communication signal from the main controller, and operate based on the single second communication signal.

According to a computer-readable recording medium storing a program for implementing a method for controlling an air conditioner according to an embodiment, an indoor controller may receive an operation command from a user, and generate a plurality of first communication signals corresponding to the operation command. A main controller connected to the indoor controller may receive the plurality of first communication signals, and convert the plurality of first communication signals into a single second communication signal by combining the plurality of first communication signals. An outdoor unit connected to the main controller may receive the single second communication signal from the main controller, and operate based on the single second communication signal.

### [Advantageous Effects]

According to the disclosure, an inverter outdoor unit may be connected to an existing contact-type air conditioner by adding a main controller to the existing contact-type air conditioner, thereby improving both compatibility and energy efficiency.

According to an embodiment, a function of an indoor unit that may not be provided in an existing contact-type air conditioner may be provided, thereby improving user convenience.

According to an embodiment, an air conditioner fan, auxiliary heat source, and other air conditioning devices may be controlled by delaying or blocking a communication signal, thereby improving user convenience.

### [Description of Drawings]

FIG. 1 illustrates a configuration of an air conditioner according to an embodiment.
FIG. 2 is a control block diagram illustrating the air conditioner according to an embodiment.
FIG. 3 illustrates a main controller according to an embodiment.
FIG. 4 illustrates a connection among an indoor controller and contact terminals in an existing air conditioner.
FIG. 5 illustrates a connection among the main controller and components of the air conditioner according to an embodiment.
FIG. 6 illustrates data by which the main controller of the air conditioner according to an embodiment determines an outdoor unit output signal.
FIG. 7 illustrates a process of controlling a defrosting operation by the main controller according to an embodiment.
FIG. 8 is a flowchart illustrating operations of determining an operation mode of an outdoor unit by the main controller in the air conditioner according to an embodiment.
FIG. 9 is a flowchart illustrating operations of determining an operation of an indoor unit by the main controller in the air conditioner according to an embodiment.

### [Modes of the Disclosure]

Various embodiments and the terms used herein are not intended to limit the technology disclosed herein to specific forms, and the disclosure should be understood to include various modifications, equivalents, and/or alternatives to the corresponding embodiments.

In describing the drawings, similar reference numerals may be used to designate similar constituent elements.

A singular expression may include a plural expression unless otherwise indicated herein or unless the context clearly indicates otherwise.

The terms "A or B," "at least one of A or/and B," or "one or more of A or/and B," "A, B or C," "at least one of A, B or/and C," or "one or more of A, B or/and C," and the like used herein may include any and all combinations of one or more of the associated items listed.

The term "and/or" includes a plurality of combinations of relevant items or any one item among a plurality of relevant items.

Herein, the terms "a first", "a second", "the first", "the second", etc. may be used simply to distinguish an element from other elements, but are not limited to any other aspect (e.g., importance or order) of elements.

When an element (e.g., a first element) is referred to as being "(functionally or communicatively) coupled" or "connected" to another element (e.g., a second element), the first element may be connected to the second element directly (e.g., wired), wirelessly, or through a third element.

In this disclosure, the terms "including", "having", and the like are used to specify features, numbers, steps, operations, elements, components, or combinations thereof, but do not preclude the presence or addition of one or more of the features, elements, steps, operations, elements, components, or combinations thereof.

When an element is said to be "connected," "coupled," "supported," or "contacted" to another element, this includes not only when elements are directly connected, coupled, supported, or contacted, but also when elements are indirectly connected, coupled, supported, or contacted through a third element.

Throughout the description, when an element is "on" another element, this includes not only when the element is in contact with the other element, but also when there is another element between the two elements.

An air conditioner 1 according to various embodiments is a device that performs functions such as air purification, ventilation, humidity control, cooling or heating in an air-conditioning space (hereinafter referred to as "indoor space"), and particularly a device having at least one of these functions.

According to an embodiment, the air conditioner 1 may include a heat pump device to perform a cooling function or a heating function. The heat pump device may include a refrigeration cycle in which a refrigerant is circulated through a compressor, a first heat exchanger, an expansion device and a second heat exchanger. All components of the heat pump device may be embedded in one housing forming an exterior of an air conditioner, which includes a window-type air conditioner or a portable air conditioner. On the other hand, some components of the heat pump device may be divided and embedded in a plurality of housings forming a single air conditioner, which includes a wall-mounted air conditioner, a stand-type air conditioner, and a system air conditioner.

The air conditioner 1 including the plurality of housings may include at least one outdoor unit 20 installed outdoors and at least one indoor unit 30 installed indoors. For example, the air conditioner 1 may be provided in such a way that a single outdoor unit 20 and a single indoor unit 30 are connected by a refrigerant pipe. Alternatively, the air conditioner 1 may be provided in such a way that a single outdoor unit 20 is connected to two or more indoor units 30 by a refrigerant pipe. Alternatively, the air conditioner 1 may be provided in such a way that two or more outdoor units 20 and two or more indoor units 30 are connected through a plurality of refrigerant pipes.

The outdoor unit 20 may be electrically connected to the indoor unit 30. For example, information (or commands) for controlling the air conditioner 1 may be received through an input interface provided in the outdoor unit 20 or the indoor unit 30. The outdoor unit 20 and indoor unit 30 may operate simultaneously or sequentially in response to a user input.

The air conditioner 1 may include an outdoor heat exchanger provided in the outdoor unit 20, an indoor heat exchanger provided in the indoor unit 30, and a refrigerant pipe connecting the outdoor heat exchanger and the indoor heat exchanger.

The outdoor heat exchanger may be configured to exchange heat between a refrigerant and outdoor air through a phase change of the refrigerant (e.g., evaporation or condensation). For example, while the refrigerant is condensed in the outdoor heat exchanger, the refrigerant may radiate heat to the outdoor air. While the refrigerant flowing in the outdoor heat exchanger evaporates, the refrigerant may absorb heat from the outdoor air.

The indoor unit 30 is installed indoors. For example, according to the arrangement method of the indoor unit 30, the indoor unit 30 may be classified into a ceiling-type indoor unit, a stand-type indoor unit, a wall-mounted indoor unit, and the like. For example, the ceiling-type indoor unit may be classified into a 4-way type indoor unit, a 1-way type indoor unit, a duct type indoor unit, and the like according to a method of discharging air.

As mentioned above, the indoor heat exchanger may be configured to exchange heat between a refrigerant and indoor air through a phase change of the refrigerant (e.g., evaporation or condensation). For example, while the refrigerant in the indoor unit 30 evaporates, the refrigerant may absorb heat from the indoor air. The indoor space may be cooled by blowing the indoor air cooled through the cooled indoor heat exchanger. While the refrigerant is condensed in the indoor heat exchanger, the refrigerant may radiate heat to the indoor air. The indoor space may be heated by blowing the indoor air heated through the high-temperature indoor heat exchanger.

In other words, the air conditioner 1 may perform a cooling or heating function through a phase change process of a refrigerant circulating between the outdoor heat exchanger and the indoor heat exchanger. To circulate the refrigerant, the air conditioner 1 may include a compressor for compressing the refrigerant. The compressor may intake refrigerant gas through an inlet and compress the refrigerant gas. The compressor may discharge high-temperature and high-pressure refrigerant gas through an outlet. The compressor may be disposed inside the outdoor unit 20.

Through the refrigerant pipe, the refrigerant may be sequentially circulated through the compressor, the outdoor heat exchanger, the expansion device, and the indoor heat exchanger, or sequentially circulated through the compressor, the indoor heat exchanger, the expansion device, and the outdoor heat exchanger.

For example, in the air conditioner 1, when a single outdoor unit 20 and a single indoor unit 30 are directly connected through a refrigerant pipe, the refrigerant may be circulated between the single outdoor unit 20 and the single indoor unit 30 through the refrigerant pipe.

For example, in the air conditioner 1, when a single outdoor unit 20 is connected to two or more indoor units 30 through a refrigerant pipe, the refrigerant may flow from the single outdoor unit 20 to the plurality of indoor units 30 through branched refrigerant pipes. Refrigerant discharged from the plurality of indoor units 30 may be combined and circulated to the outdoor unit 20. For example, through a separate refrigerant pipe, each of the plurality of indoor units 30 may be directly connected in parallel to the single outdoor unit 20.

Each of the plurality of indoor units 30 may be operated independently according to an operation mode set by a user. In other words, some of the plurality of indoor units 30 may be operated in a cooling mode, while the others of the plurality of indoor units 30 are operated in a heating mode. At this time, the refrigerant may be selectively introduced into each indoor unit 30 in a high-pressure state or a low-pressure state, discharged, and circulated to the outdoor unit 20 along a circulation path designated through a flow path switching valve to be described later.

For example, in the air conditioner 1, when two or more outdoor units 20 and two or more indoor units 30 are connected through the plurality of refrigerant pipes, refrigerants discharged from the plurality of outdoor units 20 may be combined and flow through one refrigerant pipe, and then diverged again at a certain point and introduced into the plurality of indoor units 30.

All of the plurality of outdoor units 20 may be driven, or at least some of the plurality of outdoor units 20 may not be driven according to a driving load according to an operation amount of the plurality of indoor units 30. At this time, through a flow path switching valve, the refrigerant may be provided to be introduced into and circulated to the outdoor unit 20 that is selectively driven. The air conditioner 1 may include the expansion device to lower the pressure of the refrigerant flowing into the heat exchanger. For example, the expansion device may be disposed inside the indoor unit 30 or inside the outdoor unit 20, or disposed inside the indoor unit 30 and the outdoor unit 20.

The expansion device may lower a temperature and pressure of the refrigerant by using a throttling effect. The expansion device may include an orifice configured to reduce a cross-sectional area of a flow path. A temperature and pressure of the refrigerant passing through the orifice may be lowered.

For example, the expansion device may be implemented as an electronic expansion valve configured to adjust an opening ratio (a ratio of a cross-sectional area of a flow path of a valve in a partially opened state to a cross-sectional area of the flow path of the valve in a fully open state). According to the opening ratio of the electronic expansion valve, the amount of refrigerant passing through the expansion device may be adjusted.

The air conditioner 1 may further include a flow path switching valve disposed on the refrigerant circulation path. For example, the flow path switching valve may include a 4-way valve. The flow path switching valve may determine a refrigerant circulation path depending on an operation mode of the indoor unit 30 (e.g., cooling operation or heating operation). The flow path switching valve may be connected to the outlet of the compressor.

The air conditioner 1 may include an accumulator. The accumulator may be connected to the inlet of the compressor. A low-temperature and low-pressure refrigerant, which is evaporated in the indoor heat exchanger or the outdoor heat exchanger, may flow into the accumulator.

When a refrigerant mixture of refrigerant liquid and refrigerant gas is introduced, the accumulator may separate the refrigerant liquid from the refrigerant gas, and supply the refrigerant gas separated from the refrigerant liquid to the compressor.

An outdoor fan may be provided near the outdoor heat exchanger. The outdoor fan may blow outdoor air to the outdoor heat exchanger to promote heat exchange between the refrigerant and the outdoor air.

The outdoor unit 20 of the air conditioner 1 may include at least one sensor. For example, the sensor of the outdoor unit 20 (hereinafter, referred to as an outdoor unit 20 sensor) may be provided as an environment sensor. The outdoor unit 20 sensor may be disposed at a certain position of the inside or the outside of the outdoor unit 20. For example, the outdoor unit 20 sensor may include a temperature sensor configured to detect an air temperature around the outdoor unit 20, a humidity sensor configured to detect an air humidity around the outdoor unit 20, a refrigerant temperature sensor configured to detect a refrigerant temperature in a refrigerant pipe passing through the outdoor unit 20, or a refrigerant pressure sensor configured to detect a refrigerant pressure in a refrigerant pipe passing through the outdoor unit 20.

The outdoor unit 20 of the air conditioner 1 may include a communication circuitry 100 of the outdoor unit 20 (hereinafter, referred to as an outdoor unit 20 communication circuitry 100). The outdoor unit 20 communication circuitry 100 may be configured to receive a control signal from a controller 110 of the indoor unit 30 (hereinafter, referred to as an indoor unit 30 controller 110) of the air conditioner 1, which will be described later. Based on a control signal received through the outdoor unit 20 communication circuitry 100, the outdoor unit 20 may control the operation of the compressor, the outdoor heat exchanger, the expansion device, the flow path switching valve, the accumulator, or the outdoor fan. The outdoor unit 20 may transmit a sensing value detected by the outdoor unit 20 sensor to the indoor unit 30 controller 110 through the outdoor unit 20 communication circuitry 100.

The indoor unit 30 of the air conditioner 1 may include a housing, a blower configured to circulate air inside or outside the housing, and the indoor heat exchanger configured to exchange heat with air introduced into the housing.

The housing may include an inlet. Indoor air may flow into the housing through the inlet.

The indoor unit 30 of the air conditioner 1 may include a filter configured to filter out foreign substance in air introduced into the inside of the housing through the inlet.

The housing may include an outlet. Air flowing inside the housing may be discharged to the outside of the housing through the outlet.

An airflow guide configured to guide a direction of air discharged through the outlet may be provided in the housing of the indoor unit 30. For example, the airflow guide may include a blade positioned in the outlet. For example, the airflow guide may include an auxiliary fan for regulating an exhaust airflow, but is not limited thereto. Alternatively, the airflow guide may be omitted.

The indoor heat exchanger and the blower arranged on a flow path connecting the inlet and the outlet may be disposed inside the housing of the indoor unit 30.

The blower may include an indoor fan and a fan motor. For example, the indoor fan may include an axial fan, a mixed-flow fan, a cross-flow fan, and a centrifugal fan.

The indoor heat exchanger may be arranged between the blower and the outlet or between the inlet and the blower. The indoor heat exchanger may absorb heat from air introduced through the inlet, or transfer heat to air introduced through the inlet. The indoor heat exchanger may include a heat exchange tube through which a refrigerant flows, and a heat exchange fin in contact with the heat exchange tube to increase a heat transfer area.

The indoor unit 30 of the air conditioner 1 may include a drain tray disposed below the indoor heat exchanger to collect condensed water generated in the indoor heat exchanger. The condensed water contained in the drain tray may be drained to the outside through a drain hose. The drain tray may be provided to support the indoor heat exchanger.

The indoor unit 30 of the air conditioner 1 may include an input interface. The input interface may include any type of user input means including a button, a switch, a touch screen, and/or a touch pad. A user can directly input setting data (e.g., desired indoor temperature, cooling/heating/dehumidifying/air cleaning operation mode setting, outlet selection setting, and/or air volume setting) through the input interface.

The input interface may be connected to an external input device. For example, the input interface may be electrically connected to a wired remote controller. The wired remote controller may be installed at a specific location (e.g., a part of a wall) in an indoor space. A user can input setting data related to the operation of the air conditioner 1 by manipulating the wired remote controller. An electrical signal corresponding to the setting data obtained through the wired remote controller may be transmitted to the input interface. Further, the input interface may include an infrared sensor. A user can remotely input the setting data for the operation of the air conditioner by using a wireless remote controller. The setting data received through the wireless remote controller may be transmitted to the input interface as an infrared signal.

Further, the input interface may include a microphone. A user's voice command may be obtained through the microphone. The microphone may convert a user's voice command into an electrical signal and transmit the electrical signal to the indoor unit 30 controller 110. The indoor unit 30 controller 110 may control components of the air conditioner 1 to execute a function according to the user's voice command. The setting data obtained through the input interface (e.g., desired indoor temperature, cooling/heating/dehumidifying/air cleaning operation mode setting, outlet selection setting, and/or air volume setting) may be transmitted to the indoor unit 30 controller 110 to be described later. For example, the setting data obtained through the input interface may be transmitted to the outside, that is, to the outdoor unit 20 or a server, through a communication circuitry 100 of the indoor unit 30 (hereinafter, referred to as an indoor unit 30 communication circuitry 100) to be described later.

The indoor unit 30 of the air conditioner 1 may include a power module. The power module may be connected to an external power source to supply power to components of the indoor unit 30.

The indoor unit 30 of the air conditioner 1 may include an indoor unit sensor. The indoor unit sensor may be an environment sensor disposed inside or outside the housing. For example, the indoor unit sensor may include one or more temperature sensors and/or humidity sensors disposed in a predetermined space inside or outside the housing of the indoor unit 30. For example, the indoor unit sensor may include a refrigerant temperature sensor configured to detect a refrigerant temperature of a refrigerant pipe passing through the indoor unit 30. For example, the indoor unit sensor may include a refrigerant temperature sensor configured to detect a temperature of an entrance, a middle portion, and/or an exit of the refrigerant pipe passing through the indoor heat exchanger.

For example, each environment information detected by the indoor unit sensor may be transmitted to the indoor unit 30 controller 110 to be described later, or transmitted to the outside through the indoor unit 30 communication circuitry 100 to be described later.

The indoor unit 30 of the air conditioner 1 may include the indoor unit 30 communication circuitry 100. The indoor unit 30 communication circuitry 100 may include at least one of a short-range wireless communication module or a long-range wireless communication module. The indoor unit 30 communication circuitry 100 may include at least one antenna for wirelessly communicating with other devices. The outdoor unit 20 may include the outdoor unit 20 communication circuitry 100. The outdoor unit 20 communication circuitry 100 may also include at least one of a short-range wireless communication module or a long-range wireless communication module.

The short-range wireless communication module may include a Bluetooth communication module, a Bluetooth Low Energy (BLE) communication module, a Near Field Communication module, a WLAN (Wi-Fi) communication module, and a Zigbee communication module, an Infrared Data Association (IrDA) communication module, a Wi-Fi Direct (WFD) communication module, an Ultra-Wideband (UWB) communication module, an Ant+ communication module, a Microwave (uWave) communication module, and the like, without being limited thereto.

The long-range wireless communication module may include a communication module that performs various types of long-range wireless communication, and may include a mobile communication circuitry. The mobile communication circuitry transmits and receives radio signals with at least one of a base station, an external terminal, or a server in a mobile communication network.

The indoor unit 30 communication circuitry 100 may communicate with an external device such as a server, a mobile device, and other home appliances through an Access Point (AP). The AP may connect a Local Area Network (LAN) to which the air conditioner 1 or a user device is connected, to a Wide Area Network (WAN) to which a server is connected. The air conditioner 1 or the user device may be connected to the server through the WAN. The indoor unit 30 of the air conditioner 1 may include the indoor unit 30 controller 110 configured to control components of the indoor unit 30 including the blower, and the like. The outdoor unit 20 of the air conditioner 1 may include a controller of the outdoor unit 20 (hereinafter, referred to as an outdoor unit 20 controller 110) configured to control components of the outdoor unit 20 including the compressor, and the like. The indoor unit 30 controller 110 may communicate with the outdoor unit 20 controller 110 through the indoor unit 30 communication circuitry 100 and the outdoor unit 20 communication circuitry 100. The outdoor unit 20 communication circuitry 100 may transmit a control signal generated by the outdoor unit 20 controller 110 to the indoor unit 30 communication circuitry 100, or transmit a control signal transmitted from the indoor unit 30 communication circuitry 100 to the outdoor unit 20 controller 110. In other words, the outdoor unit 20 and the indoor unit 30 may perform bidirectional communication. The outdoor unit 20 and indoor unit 30 may transmit and receive various signals generated during operation of the air conditioner 1.

The outdoor unit 20 controller 110 may be electrically connected to components of the outdoor unit 20 and may control operations of each component. For example, the outdoor unit 20 controller 110 may adjust a frequency of the compressor and control the flow path switching valve to change a circulation direction of the refrigerant. The outdoor unit 20 controller 110 may adjust a rotational speed of the outdoor fan. Further, the outdoor unit 20 controller 110 may generate a control signal for adjusting the opening degree of the expansion valve. Under the control of the outdoor unit 20 controller 110, the refrigerant may be circulated along the refrigerant circulation circuit including the compressor, the flow path switching valve, the outdoor heat exchanger, the expansion valve and the indoor heat exchanger.

Various temperature sensors included in the outdoor unit 20 and the indoor unit 30 may transmit electrical signals corresponding to detected temperatures to the outdoor unit 20 controller 110 and/or the indoor unit 30 controller 110. For example, the humidity sensors included in the outdoor unit 20 and the indoor unit 30 may respectively transmit electrical signals corresponding to the detected humidity to the outdoor unit 20 controller 110 and/or the indoor unit 30 controller 110.

The indoor unit 30 controller 110 may obtain a user input from a user device including a mobile device through the indoor unit 30 communication circuitry 100, or directly obtain a user input through the input interface or the remote controller. The indoor unit 30 controller 110 may control components of the indoor unit 30 including the blower in response to the received user input. The indoor unit 30 controller 110 may transmit information related to the received user input to the outdoor unit 20 controller 110 of the outdoor unit 20.

The outdoor unit 20 controller 110 may control components of the outdoor unit 20 including the compressor based on the information related to the user input received from the indoor unit 30. For example, when a control signal corresponding to a user input for selecting an operation mode such as a cooling operation, a heating operation, a fan operation, a defrosting operation, or a dehumidifying operation is received from the indoor unit 30, the outdoor unit 20 controller 110 may control components of the outdoor unit 20 to perform an operation of the air conditioner 1 corresponding to the selected operation mode.

The outdoor unit 20 controller 110 and the indoor unit 30 controller 110 may each include a processor and a memory, respectively. The indoor unit 30 controller 110 may include at least one first processor and at least one first memory, and the outdoor unit 20 controller 110 may include at least one second processor and at least one second memory.

The memory may memorize/store various types of information necessary for the operation of the air conditioner 1. The memory may store instructions, applications, data and/or programs necessary for the operation of the air conditioner 1. For example, the memory may store various programs for cooling operation, heating operation, dehumidifying operation and/or defrosting operation of the air conditioner. The memory may include a volatile memory such as a Static Random Access Memory (S-RAM) and a Dynamic Random Access Memory (D-RAM) for temporarily storing data. In addition, the memory may include a non-volatile memory such as a Read Only Memory (ROM), an Erasable Programmable Read Only Memory (EPROM), and an Electrically Erasable Programmable Read Only Memory (EEPROM) for long-term storage of data.

The processor may generate a control signal for controlling an operation of the air conditioner 1 based on instructions, applications, data and/or programs stored in the memory. The processor may be hardware and may include a logic circuit and an arithmetic circuit. The processor may process data according to a program and/or instructions provided from the memory, and may generate a control signal according to a processing result. The memory and the processor may be implemented as one control circuit or a plurality of circuits.

The indoor unit 30 of the air conditioner 1 may include an output interface. The output interface may be electrically connected to the indoor unit 30 controller 110, and output information related to the operation of the air conditioner under the control of the indoor unit 30 controller 110. For example, the output interface may output information such as an operation mode selected by a user input, a wind direction, a wind volume, and a temperature. Further, the output interface may output sensing information obtained from the indoor unit sensor or the outdoor unit 20 sensor, and output warning/error messages.

The output interface may include a display and a speaker. The speaker may be a sound device configured to output various sounds. The display may display information, input by a user or provided to a user, as various graphic elements. For example, operation information of the air conditioner may be displayed as at least one of an image or text. Further, the display may include an indicator providing specific information. The display may include a Liquid Crystal Display (LCD) panel, a Light Emitting Diode (LED) panel, an Organic Light Emitting Diode (OLED) panel, a micro-LED panel, and/or a plurality of LEDs.

Hereinafter, embodiments of the disclosure will be described in detail with reference to the accompanying drawings.

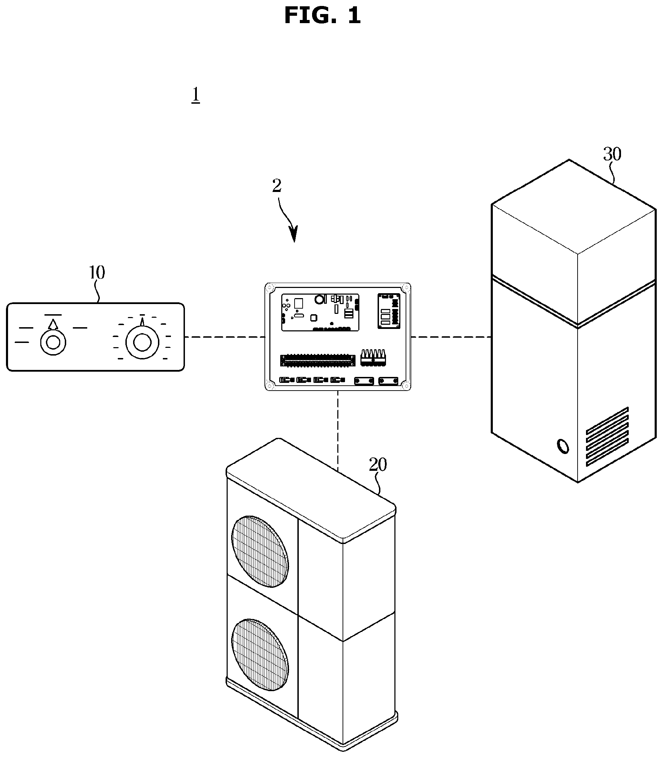

FIG. 1 illustrates a configuration of an air conditioner according to an embodiment.

Referring to FIG. 1, an air conditioner 1 includes an outdoor unit 20 disposed in an outdoor space for performing heat exchange between outdoor air and a refrigerant, and an indoor unit 30 disposed in an indoor space for performing heat exchange between indoor air and a refrigerant. The outdoor unit 20 may be located outside an air conditioning space, and the indoor unit 30 may be located in the air conditioning space. The air conditioning space refers to a space that is cooled or heated by the air conditioner 1. For example, the outdoor unit 20 may be placed outside a building, and the indoor unit 30 may be placed in a space separated from the outside by a wall, such as a living room or an office room.

As described above, the outdoor unit 20 and the indoor unit 30 may be connected by an external pipe. A refrigerant may be circulated through the outdoor unit 20, the external pipe, and the indoor unit 30. One end of the external pipe may be connected to a piping valve located on one side of the outdoor unit 20. In addition, the external pipe may be connected to a refrigerant pipe provided inside the outdoor unit 20 and the indoor unit 30.

The refrigerant may be circulated to the indoor unit 30 and the outdoor unit 20 along a refrigerant flow path and absorb or emit heat through a state change (e.g., changing a state from gas to liquid or liquid to gas). The air conditioner 1 may include a liquid pipe connecting the indoor unit 30 and the outdoor unit 20 and serving as a passage in which a liquid refrigerant flows, and a gas pipe serving as a passage in which a gaseous refrigerant flows. The liquid pipe and the gas pipe may extend to the inside the outdoor unit 20 and the indoor unit 30.

The outdoor unit 20 may include a compressor configured to compress the refrigerant, an outdoor heat exchanger configured to perform heat exchange between the outdoor air and the refrigerant, a four-way valve configured to guide the refrigerant compressed by the compressor to the outdoor heat exchanger or an indoor heat exchanger based on cooling operation or heating operation, an expansion valve configured to decompress the refrigerant, and an accumulator configured to prevent a liquid refrigerant that has not evaporated from flowing into the compressor.

The compressor may operate with electric energy provided from an external power source. The compressor includes a compressor motor and compresses a gaseous refrigerant of low pressure into high pressure by using a rotational force of the compressor motor. An operation frequency of the compressor may be changed to correspond to a capacity required by the indoor unit 30. The compressor may be an inverter air compressor, a positive displacement compressor, or a dynamic compressor, and various types of compressors that may be considered by a designer may be used.

The indoor unit 30 may include an indoor heat exchanger and an indoor fan. The indoor heat exchanger performs heat exchange between indoor air and a refrigerant. The indoor fan may flow indoor air to the indoor heat exchanger. A plurality of indoor fans may be provided. Indoor heat exchanger temperature sensors may be provided at both sides (inlet and outlet) of the indoor heat exchanger to detect the temperature of the indoor heat exchanger. The indoor heat exchanger temperature sensor may be installed around the inlet and/or outlet of the indoor heat exchanger, or may be installed to contact a refrigerant pipe connected to the inlet and/or outlet of the indoor heat exchanger. An indoor temperature sensor for detecting the indoor temperature may be provided inside the indoor unit 30. The temperature sensor may be implemented with at least one of a bimetal thermometer, a thermistor thermometer, or an infrared thermometer. In addition to the above, the air conditioner 1 may include various types of temperature sensors.

During a cooling operation, the refrigerant may emit heat in the outdoor heat exchanger of the outdoor unit 20 and absorb heat in the indoor heat exchanger of the indoor unit 30. During the cooling operation, the refrigerant compressed by the compressor of the outdoor unit 20 may first be supplied to the outdoor heat exchanger through the four-way valve, and then may be supplied to the indoor heat exchanger of the indoor unit 30 through the expansion valve. During the cooling operation, the outdoor heat exchanger operates as a condenser condensing the refrigerant, and the indoor heat exchanger operates as an evaporator evaporating the refrigerant. During the cooling operation, the high-temperature and high-pressure gaseous refrigerant discharged from the compressor moves to the outdoor heat exchanger. The liquid or approximately liquid-state refrigerant condensed in the outdoor heat exchanger is expanded and decompressed in the expansion valve. The two-phase refrigerant passing through the expansion valve moves to the indoor heat exchanger. The refrigerant introduced into the indoor heat exchanger exchanges heat with ambient air and evaporates. As a result, a temperature of the heat-exchanged ambient air is lowered and cold air is discharged to the outside of the indoor unit 30.

During a heating operation, the refrigerant may emit heat in the indoor heat exchanger and absorb heat in the outdoor heat exchanger. That is, during the heating operation, the refrigerant compressed by the compressor may first be supplied to the indoor heat exchanger through the four-way valve, and then may be supplied to the outdoor heat exchanger. **In** this case, the indoor heat exchanger operates as a condenser condensing the refrigerant, and the outdoor heat exchanger operates as an evaporator evaporating the refrigerant. During the heating operation, the high-temperature and high-pressure gaseous refrigerant discharged from the compressor moves to the indoor heat exchanger. The high-temperature and high-pressure gaseous refrigerant passing through the indoor heat exchanger exchanges heat with low-temperature dry air. The refrigerant is condensed into a liquid or approximately liquid-state refrigerant to emit heat, and as the air absorbs the heat, heated air is discharged to the outside of the indoor unit 30.

Although it has been described that the air conditioner 1 includes a single outdoor unit 20 and a single indoor unit 30, the air conditioner 1 may include a plurality of outdoor units 20 and a plurality of indoor units 30. For example, a plurality of indoor units 30 may be connected to the single outdoor unit 20. Further, a shape of the indoor unit 30 is not limited to that described above. Any type of indoor unit 30 may be used as long as the indoor unit 30 is installed in an indoor space and is capable of cooling or heating the indoor space.

**In** addition, the air conditioner 1 may include an indoor controller 10 and a main controller 2. The main controller 2 may be electrically connected to the outdoor unit 20, the indoor unit 30 and the indoor controller 10. The outdoor unit 20, the indoor unit 30, and the indoor controller 10 may be connected to the main controller 2 by wire. The indoor controller 10 may also be referred to as a 'contact controller'.

The indoor controller 10 may obtain a user input. The indoor controller 10 may obtain a user input related to an indoor temperature setting or heating/cooling. The main controller 2 may receive a plurality of first communication signals corresponding to the user input from the indoor controller 10.

The main controller 2 may control operations of the outdoor unit 20 and the indoor unit 30. The main controller 2 may operate the outdoor unit 20 and the indoor unit 30 in response to a user input which is input through the indoor controller 10. The main controller 2 may control an operation of the air conditioner 1 based on a received electrical signal.

The main controller 2 may serve as an adapter connecting various types of outdoor units 20 to the air conditioner 1. The main controller 2 may be provided to control the outdoor unit 20 manufactured by the same manufacturer as the manufacturer of the outdoor unit 20, as well as the outdoor unit 20 manufactured by a different manufacturer, and/or the outdoor unit 20 having a different communication protocol.

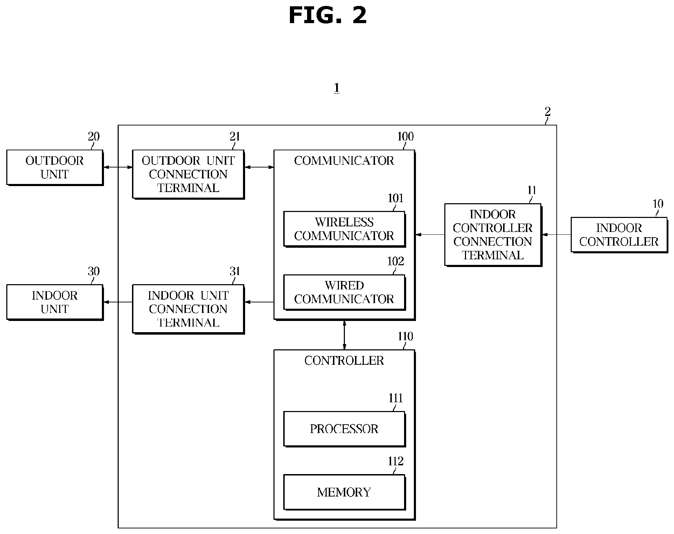

FIG. 2 is a control block diagram illustrating the air conditioner according to an embodiment.

Referring to FIG. 2, the air conditioner 1 may include the main controller 2, the outdoor unit 20, the indoor unit 30 and the indoor controller 10, and the main controller 2 may include a controller 110 including a memory 112 and a processor 111, and a communicator 100.

The memory 112 of the main controller 2 may memorize/store various information required for operating the air conditioner 1. The memory 112 may store instructions, applications, data and programs for operating the air conditioner 1. As described above, the memory 112 may include a volatile memory, such as Static Random Access Memory (SRAM) or Dynamic Random Access Memory (DRAM) for temporary data storage, and a non-volatile memory, such as Read Only Memory (ROM), Erasable Programmable Read Only Memory (EPROM), and Electrically Erasable Programmable Read Only Memory (EEPROM) for long-term data storage.

The processor 111 of the main controller 2 may generate a control signal for controlling an operation of the air conditioner 1 based on the instructions, applications, data and programs stored in the memory 112. The processor 111 is a hardware and may include a logic circuit and arithmetic circuit. The processor 111 may process data according to the programs and/or instructions provided from the memory 112, and generate a control signal according to a result of the processing. The memory 112 and the processor 111 may be implemented as one control circuit or as a plurality of circuits.

The main controller 2 may receive the plurality of first communication signals, transmitted from the indoor controller 10, and determine an operation of the outdoor unit 20 and/or the indoor unit 30. The first communication signal may include a contact signal generated from the contact controller, and the contact signal refers to a signal that indicates whether a contact formed by a switch is open or closed.

The controller 110 of the main controller 2 may include a signal converter configured to convert the plurality of received first communication signals into a single second communication signal by combining the plurality of received first communication signals. In this instance, the controller 110 may combine signals in an ON state from among the plurality of first communication signals to convert into the second communication signal.

The second communication signal may include a Recommended Standard (RS) 485 signal corresponding to the RS 485 communication standard, and may also include a communication signal conforming to a communication standard different from the first communication signal.

The controller 110 may transmit the second communication signal to the outdoor unit 20 and determine an operation of the outdoor unit 20, and the outdoor unit 20 may operate based on the second communication signal. Accordingly, the air conditioner 1 according to an embodiment may ensure compatibility even in a case where a previously used outdoor unit 20 is replaced with a different type of outdoor unit 20.

The controller 110 may perform bidirectional communication with the outdoor unit 20 through an outdoor unit connection terminal 21 including a transmitting terminal and a receiving terminal. Specifically, the controller 110 may control the communicator 100 to transmit the second communication signal to the transmitting terminal, and receive an operation signal related to the operation of the outdoor unit 20 from the receiving terminal. Accordingly, the controller 110 may determine a current operating state of the outdoor unit 20 and a control operation required for the outdoor unit 20. For example, the controller 110 may determine whether to enter a defrosting operation based on an operation signal of the outdoor unit 20.

The controller 110 may determine an operation of the indoor unit 30 based on the plurality of first communication signals, and may control the communicator 100 to transmit the determined operation of the indoor unit 30 to the indoor unit 30. Specifically, the controller 110 may determine an operation mode and a set temperature of the indoor unit 30 corresponding to the plurality of first communication signals.

The controller 110 may also determine an operation of the indoor unit 30 by blocking transmission of at least one first communication signal among the plurality of first communication signals for a reference period of time. For example, the controller 110 may block a G signal corresponding to an indoor fan signal from among the plurality of first communication signals for a preset reference period of time, thereby enabling efficient defrosting operation. Accordingly, even in a case where the indoor unit 30 is a different type of indoor unit other than an inverter indoor unit, an air conditioner fan, auxiliary heat source, and other air conditioning devices may be controlled by delaying or blocking a portion of signals.

In this instance, the operation of the indoor unit 30 may include selecting one from a plurality of operation stages, and the plurality of operation stages may include low, medium, and high cooling and heating levels.

The communicator 100 of the main controller 2 may include a circuit for electrically connecting the outdoor unit 20, the indoor unit 30, and the indoor controller 10. For example, the communicator 100 may include a plurality of contact terminals connected to the indoor controller 10. The plurality of contact terminals may include the outdoor unit connection terminal 21 and an indoor unit connection terminal 31.

Also, the communicator 100 may include a wired communicator 102 and/or a wireless communicator 101 to communicate with the outdoor unit 20 and the indoor unit 30. The communicator 100 may transmit a control signal transmitted from the processor 111 to the outdoor unit 20 and the indoor unit 30, or may transmit an electrical signal transmitted from the outdoor unit 20 and the indoor unit 30 to the processor 111.

In addition, the communicator 100 may perform communication with an access point (AP, not shown) separately provided in an air conditioning space, and may be connected to a network through the access point. The communicator 100 may communicate with an external device (e.g., a smartphone) through the access point. The communicator 100 may receive information of an external device connected to the access point and transmit the information of the external device to the processor 111. Through the above, a user may remotely control the air conditioner 1.

The air conditioner 1 according to an embodiment may further include a remote controller (not shown). The remote controller may include an inputter and a display. The inputter of the remote controller may obtain a user input and output an electrical signal (voltage or current) corresponding to the user input to the main controller 2. For example, the remote controller may obtain a power ON/OFF input for turning on or off the air conditioner 1, an operation mode selection input for setting an operation mode of the air conditioner 1, and/or a temperature adjustment input for adjusting an indoor temperature.

The inputter of the remote controller may be implemented as a variety of buttons and/or dials. For example, a plurality of buttons may include a push switch operated by a user pressing, a membrane switch, and/or a touch switch operated by contact with a part of user's body. The buttons may include an operation mode button for selecting an operation mode such as a cooling operation, a heating operation and a fan operation, a temperature button for setting a target temperature of an indoor space (air conditioning space), a wind direction button for setting a wind direction, and/or a wind volume button for setting a wind level (rotational speed of an indoor fan). The buttons may also be implemented as rotatable dials.

The display of the remote controller may display information about a state and/or operation of the air conditioner 1. The display may display information input by a user or information provided to the user in various screens. The display may display information related to the operation of the air conditioner 1 as at least one of an image or text. In addition, the display may display a Graphic User Interface (GUI) allowing control of the air conditioner 1. That is, the display may display User Interface elements (UI elements) such as icons.

The display of the remote controller may include various types of display panels. For example, the display may include a Liquid Crystal Display (LCD) panel, a Light Emitting Diode (LED) panel, an Organic Light Emitting Diode (OLED) panel, or a micro LED panel. The display may be implemented as a touch display. The touch display may include a display panel for displaying an image and a touch panel for receiving a touch input. In a case where the display is provided as a touch display, an inputter may not be separately provided in the remote controller.

The indoor controller 10 may obtain a user input. For example, the indoor controller 10 may obtain an operation mode selection input for selecting an operation mode and a temperature setting input for setting an indoor temperature. The indoor controller 10 may be a separate input device distinguished from the remote controller. The indoor controller 10 may have a simpler structure than the remote controller. The indoor temperature setting or current setting of the outdoor unit 20 may be simply input by the indoor controller 10.

The indoor controller 10 may include an operation mode inputter and a regulator. The operation mode inputter and the regulator may each be provided as a rotatable dial, without being limited thereto. The operation mode inputter and the regulator may be provided in various shapes. The operation mode inputter and the regulator may include various buttons.

The operation mode inputter may be provided to select an operation mode of the air conditioner 1. The indoor controller 10 may transmit an electrical signal (operation mode selection signal) corresponding to an operation of the operation mode inputter to the main controller 2. For example, the operation mode of the air conditioner 1 may include a cooling operation mode, a heating operation mode, and an automatic operation mode. The air conditioner 1 may operate in the operation mode selected by manipulation of the operation mode inputter. That is, the air conditioner 1 may perform a cooling operation, a heating operation, or an automatic operation. A user may select a power-off, cooling operation, heating operation, or automatic operation by manipulating the operation mode inputter.

Constituent components of the air conditioner 1 are not limited thereto. Other constituent components may be added to the air conditioner 1 in addition to the aforementioned constituent components of the outdoor unit 20.

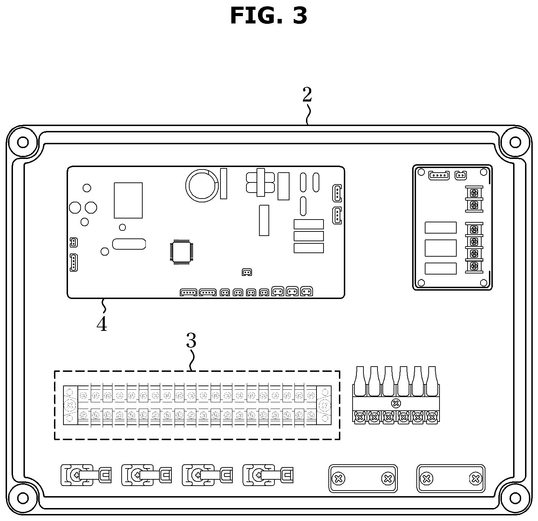

FIG. 3 illustrates a main controller according to an embodiment.

Referring to FIG. 3, the main controller 2 may include a main circuit board 4 and a plurality of contact terminals 3. The memory 112 and the processor 111 may be mounted on the main circuit board 4. The processor 111 may be referred to as 'Micom'. The communicator 100 may communicate with an external device through terminal blocks for connecting with other devices in addition to the contact terminals 3.

The outdoor unit 20, the indoor unit 30 and the indoor controller 10 may be connected to the plurality of contact terminals 3. The contact terminals 3 and each of the outdoor unit 20, the indoor unit 30, and the indoor controller 10 may be connected with each other by wire and/or cables.

For example, the outdoor unit 20 may be connected to a F1 terminal and a F2 terminal from among the contact terminals 3. The main controller 2 may communicate with the outdoor unit 20 through the F1 terminal and the F2 terminal. For example, a signal generated by the processor 111 of the main controller 2 may be transmitted to the outdoor unit 20 through the F1 terminal, and a signal generated by the outdoor unit 20 may be transmitted to the processor 111 through the F2 terminal.

The indoor unit 30 may be connected to a TR terminal, a TEI terminal, and a TEO terminal among the contact terminals 3. As described above, the indoor unit 30 may include an indoor temperature sensor and an indoor heat exchanger temperature sensor. A signal generated by the indoor temperature sensor of the indoor unit 30 may be input to the processor 111 of the main controller 2 through the TR terminal. A signal generated by the indoor heat exchanger temperature sensor of the indoor unit 30 may be input to the processor 111 of the main controller 2 through the TEI terminal and the TEO terminal.

A remote controller may be connected to a F3 terminal and a F4 terminal from among the contact terminals 3. The main controller 2 may communicate with the remote controller through the F3 terminal and the F4 terminal. For example, a signal generated by the processor 111 of the main controller 2 may be transmitted to the remote controller through the F3 terminal, and a signal generated by the remote controller may be transmitted to the processor 111 through the F4 terminal.

The indoor controller 10 may be connected to a COM terminal, an AUT terminal, a HP terminal, a CO terminal, an AV1 terminal, and an AV2 terminal from among the contact terminals 3. The COM terminal, the AUT terminal, the HP terminal, and the CO terminal may be connected to an operation mode inputter of the indoor controller 10. The COM terminal may refer to a common terminal, an auto operation signal may be input to the AUT terminal, a heating operation signal may be input to the HP terminal, and a cooling operation signal may be input to the CO terminal. A signal may be input to one of the AUT terminal, the HP terminal, or the CO terminal according to an operation of the operation mode inputter.

The AV1 terminal and the AV2 terminal may be connected to the regulator of the indoor controller 10. The AV1 terminal may be referred to as a first contact terminal, and the AV2 terminal may be referred to as a second contact terminal. A voltage of a signal applied to the first contact terminal (AV1 terminal) may vary depending on an operation of the regulator. In other words, the voltage applied between the first contact terminal (AV1 terminal) and the second contact terminal (AV2) may vary depending on the operation of the regulator. The main controller 2 may determine a target temperature of an indoor space or a maximum current applied to the outdoor unit 20 based on the voltage of the signal applied to the first contact terminal (AV1 terminal).

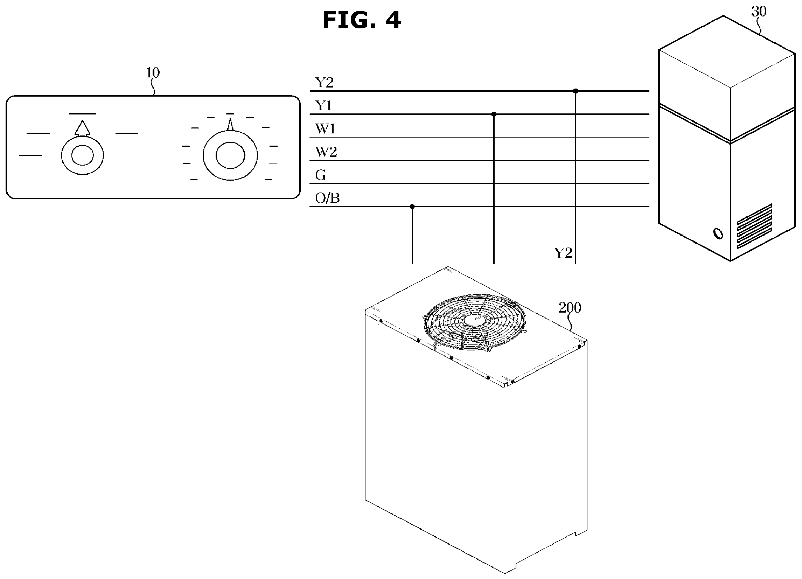

FIG. 4 illustrates a connection among an indoor controller and contact terminals in an existing air conditioner.

Referring to FIG. 4, unlike the disclosure, an existing air conditioner 1 does not include an main controller 2, but only is provided with a contact signal line for transmitting and receiving a 24V alternating current (AC) contact signal.

Specifically, a first cooling terminal (Y1) for controlling cooling, a second cooling terminal (Y2) for controlling cooling more precisely, a first heating terminal (W1) for controlling heating, a second heating terminal (W2) for controlling heating more precisely, a fan terminal (G) for controlling an indoor fan, and a four-way valve terminal (O/B) for controlling a four-way valve may be disposed.

As shown in FIG. 4, the indoor controller 10 of the existing air conditioner 1 may transmit, to an outdoor unit 200 and the indoor unit 30, a contact signal corresponding to the contact signal line designed in advance, but a configuration for converting the contact signal is not provided in the existing air conditioner, and thus an outdoor unit using a different communication method from the outdoor unit 200 of the existing air conditioner 1 could not be controlled.

That is, to replace the existing air conditioner with an inverter product having high energy efficiency, both the indoor unit 30 and the outdoor unit 200 are required to be replaced, which increases a cost.

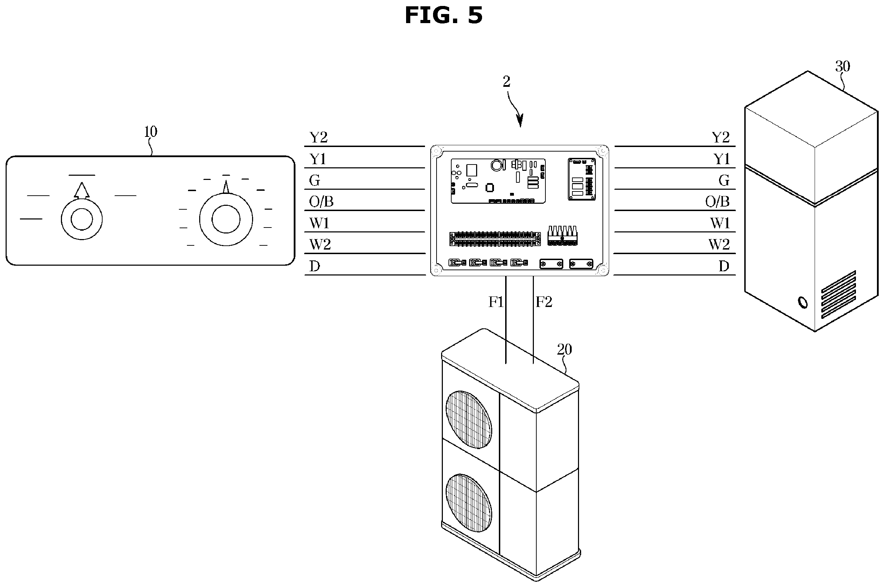

Accordingly, the air conditioner 1 according to an embodiment is additionally provided with the main controller 2 connecting the indoor controller 10, the outdoor unit 20, and the indoor unit 30 as shown in FIG. 5 and below. Thus, a communication signal may be converted to connect the outdoor unit 20 with improved efficiency with a different type of air conditioner.

Specifically, the outdoor unit 20 according to an embodiment may include an inverter outdoor unit 20. The inverter outdoor unit 20 has an improved energy efficiency compared to a constant speed outdoor unit. In response to reaching a set temperature during an operation of the air conditioner 1, the inverter outdoor unit 20 may save energy by maintaining a power saving mode.

Thus, the air conditioner 1 according to an embodiment may connect the inverter outdoor unit 20 by adding the main controller 2 to the existing contact-type air conditioner, thereby improving both compatibility and energy efficiency.

FIG. 5 illustrates a connection among the main controller and components of the air conditioner according to an embodiment.

Referring to FIG. 5, unlike existing air conditioners, a contact signal line of the indoor controller 10 may be connected to the main controller 2. Specifically, the first cooling terminal (Y1), the second cooling terminal (Y2), the first heating terminal (W1), the second heating terminal (W2), the fan terminal (G) for controlling an indoor fan, and the four-way valve terminal (O/B) for controlling a four-way valve, all of which extend from the indoor controller 10, may be connected to the main controller 2, without being directly connected to the indoor unit 30 or the outdoor unit 20.

The main controller 2 may convert a first communication signal received from the indoor controller 10 to generate a second communication signal, may transmit the second communication signal to the outdoor unit 20, and may precisely control an operation of the indoor unit 30 by delaying or blocking the first communication signal.

Conventionally, an outdoor unit using a different communication method from the indoor controller 10 could not be installed, but a signal may be converted according to a communication method in the air conditioner 1 according to an embodiment. Thus, even in a case where the outdoor unit 20 has a different communication method, the air conditioner 1 according to an embodiment may use the outdoor unit 20 using the different communication method. Further, conventionally, an air conditioner fan, auxiliary heat source, and other air conditioning devices could not be precisely controlled by a contact communication method, but the air conditioner fan, auxiliary heat source, and other air conditioning devices may be precisely controlled based on signal blockage or delay of the main controller 2.

Specifically, the indoor controller 10 and the indoor unit 30 may transmit and receive the first communication signal by a first communication method of the contact communication method, but may not support a second communication method of the RS 485 communication. Also, the outdoor unit 20 may receive the second communication signal by the second communication method of the RS 485 communication, but may not support the first communication method of contact-based communication. Here, supporting a communication method may refer to that a connection terminal and a signal processing circuit for communicating by the corresponding communication method are provided, and refer to that transmission and reception of signals may be performed by the corresponding communication method.

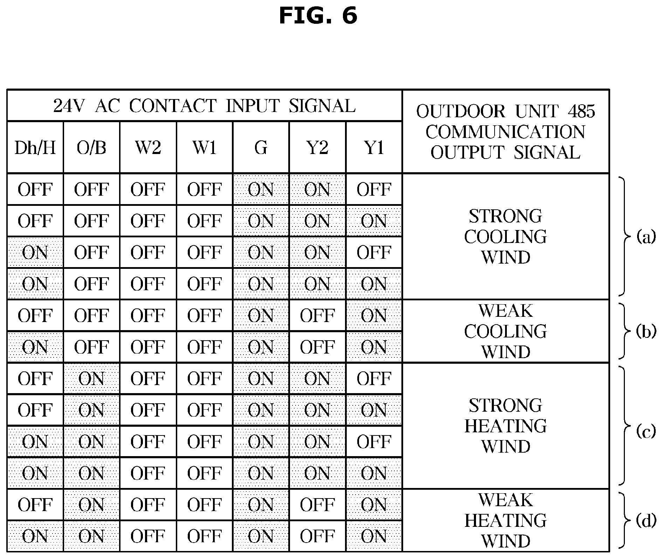

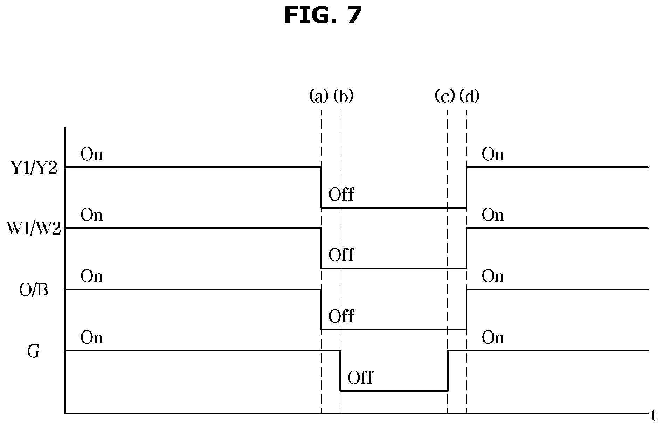

A technical problem that may be solved by the main controller 2 is described in detail with reference to FIG. 6 and FIG. 7.

FIG. 6 illustrates data by which the main controller of the air conditioner according to an embodiment determines an outdoor unit output signal.

Referring to FIG. 6, in the table, columns corresponding to a 24V AC contact input signal correspond to a plurality of first communication signals generated in response to a user's operation command received in the indoor controller 10.

As described above, from the left of the table, each terminal indicates a humidification/dehumidification terminal (Dh/H) for controlling humidification and dehumidification, the four-way valve terminal (O/B), the second heating terminal (W2), the first heating terminal (W1) ), the indoor fan terminal (G), the second cooling terminal (Y2) and the first cooling terminal (Y1).

The controller 110 of the main controller 2 may receive the plurality of first communication signals, received from each of the terminals, from the indoor controller 10, and the first communication signal may include two states, ON and OFF.

The controller 110 may generate an outdoor unit 485 communication output signal corresponding to the second communication signal by combining only the first communication signals which are in an ON state from among the plurality of first communication signals.

Specifically, the controller 110 may determine the second communication signal as a strong cooling wind (a), based on a signal from the humidification/dehumidification terminal (Dh/H) being in an OFF state, a signal from the four-way valve terminal (O/B) being in an OFF state, a signal from the second heating terminal (W2) being in an OFF state, a signal from the first heating terminal (W1) being in an OFF state, a signal from the indoor fan terminal (G) being in an ON state, a signal from the second cooling terminal (Y2) being in an ON state, and a first cooling terminal (Y1) being in an OFF state. That is, during an operation of the indoor fan and in response to the ON signal being output from the second cooling terminal for precisely controlling cooling, the controller 110 may determine that a user desires powerful cooling and determine the second communication signal as the strong cooling wind (a).

Also, the controller 110 may determine the second communication signal as the strong cooling wind (a), based on a signal from the humidification/dehumidification terminal (Dh/H) being in an OFF state, a signal from the four-way valve terminal (O/B) being in an OFF state, a signal from the second heating terminal (W2) being in an OFF state, a signal from the first heating terminal (W1) being in an OFF state, a signal from the indoor fan terminal (G) being in an ON state, a signal from the second cooling terminal (Y2) being in an ON state, and a first cooling terminal (Y1) being in an ON state. That is, during an operation of the indoor fan and in response to the ON signals being output from the first cooling terminal for operating cooling and from the second cooling terminal for precisely controlling cooling, the controller 110 may determine that a user desires powerful cooling and determine the second communication signal as the strong cooling wind (a).

In addition, the controller 110 may determine the second communication signal as the strong cooling wind (a), based on a signal from the humidification/dehumidification terminal (Dh/H) being in an ON state, a signal from the four-way valve terminal (O/B) being in an OFF state, a signal from the second heating terminal (W2) being in an OFF state, a signal from the first heating terminal (W1) being in an OFF state, a signal from the indoor fan terminal (G) being in an ON state, a signal from the second cooling terminal (Y2) being in an ON state, and a first cooling terminal (Y1) being in an OFF state. That is, during an operation of the indoor fan and in response to the ON signals being output from the second cooling terminal for precisely controlling cooling and from the humidification/dehumidification terminal for humidification/dehumidification, the controller 110 may determine that a user desires dehumidification with a strong cooling setting and determine the second communication signal as the strong cooling wind (a).

In addition, the controller 110 may determine the second communication signal as the strong cooling wind (a), based on a signal from the humidification/dehumidification terminal (Dh/H) being in an ON state, a signal from the four-way valve terminal (O/B) being in an OFF state, a signal from the second heating terminal (W2) being in an OFF state, a signal from the first heating terminal (W1) being in an OFF state, a signal from the indoor fan terminal (G) being in an ON state, a signal from the second cooling terminal (Y2) being in an ON state, and a first cooling terminal (Y1) being in an ON state. That is, during an operation of the indoor fan and in response to the ON signals being output from the first cooling terminal for operating cooling and from the second cooling terminal for precisely controlling cooling and from the humidification/dehumidification terminal for humidification/dehumidification, the controller 110 may determine that a user desires dehumidification with a strong cooling setting and determine the second communication signal as the strong cooling wind (a).

In addition, the controller 110 may determine the second communication signal as a weak cooling wind (b), based on a signal from the humidification/dehumidification terminal (Dh/H) being in an OFF state, a signal from the four-way valve terminal (O/B) being in an OFF state, a signal from the second heating terminal (W2) being in an OFF state, a signal from the first heating terminal (W1) being in an OFF state, a signal from the indoor fan terminal (G) being in an ON state, a signal from the second cooling terminal (Y2) being in an OFF state, and a first cooling terminal (Y1) being in an ON state. That is, during an operation of the indoor fan and in response to the ON signal being output from the first cooling terminal for operating cooling, the controller 110 may determine that a user desires weak cooling and determine the second communication signal as the weak cooling wind (b).

In addition, the controller 110 determine the second communication signal as the weak cooling wind (b), based on a signal from the humidification/dehumidification terminal (Dh/H) being in an ON state, a signal from the four-way valve terminal (O/B) being in an OFF state, a signal from the second heating terminal (W2) being in an OFF state, a signal from the first heating terminal (W1) being in an OFF state, a signal from the indoor fan terminal (G) being in an ON state, a signal from the second cooling terminal (Y2) being in an OFF state, and a first cooling terminal (Y1) being in an ON state. That is, during an operation of the indoor fan and in response to the ON signals being output from the first cooling terminal for operating cooling and from the humidification/dehumidification terminal, the controller 110 may determine that a user desires dehumidification with a weak cooling setting and determine the second communication signal as the weak cooling wind (b).

In addition, the controller 110 may determine the second communication signal as a strong heating wind (c), based on a signal from the humidification/dehumidification terminal (Dh/H) being in an OFF state, a signal from the four-way valve terminal (O/B) being in an ON state, a signal from the second heating terminal (W2) being in an OFF state, a signal from the first heating terminal (W1) being in an OFF state, a signal from the indoor fan terminal (G) being in an ON state, a signal from the second cooling terminal (Y2) being in an ON state, and a first cooling terminal (Y1) being in an OFF state. That is, during an operation of the indoor fan and in response to the ON signals being output from the second cooling terminal and from the four-way valve terminal for cooling/heating switching, the controller 110 may determine that a user desires powerful heating and determine the second communication signal as the strong heating wind (c).

In addition, the controller 110 may determine the second communication signal as the strong heating wind (c), based on a signal from the humidification/dehumidification terminal (Dh/H) being in an OFF state, a signal from the four-way valve terminal (O/B) being in an ON state, a signal from the second heating terminal (W2) being in an OFF state, a signal from the first heating terminal (W1) being in an OFF state, a signal from the indoor fan terminal (G) being in an ON state, a signal from the second cooling terminal (Y2) being in an ON state, and a first cooling terminal (Y1) being in an ON state. That is, during an operation of the indoor fan and in response to the ON signals being output from the first and second cooling terminals and from the four-way valve terminal for cooling/heating switching, the controller 110 may determine that a user desires powerful heating and determine the second communication signal as the strong heating wind (c).

In addition, the controller 110 may determine the second communication signal as the strong heating wind (c), based on a signal from the humidification/dehumidification terminal (Dh/H) being in an ON state, a signal from the four-way valve terminal (O/B) being in an ON state, a signal from the second heating terminal (W2) being in an OFF state, a signal from the first heating terminal (W1) being in an OFF state, a signal from the indoor fan terminal (G) being in an ON state, a signal from the second cooling terminal (Y2) being in an ON state, and a first cooling terminal (Y1) being in an OFF state. That is, during an operation of the indoor fan and in response to the ON signals being output from the second cooling terminal, from the humidification/dehumidification terminal for controlling humidification/dehumidification, and from the four-way valve terminal for cooling/heating switching, the controller 110 may determine that a user desires powerful dehumidification and heating and determine the second communication signal as the strong heating wind (c).

In addition, the controller 110 may determine the second communication signal as the strong heating wind (c), based on a signal from the humidification/dehumidification terminal (Dh/H) being in an ON state, a signal from the four-way valve terminal (O/B) being in an ON state, a signal from the second heating terminal (W2) being in an OFF state, a signal from the first heating terminal (W1) being in an OFF state, a signal from the indoor fan terminal (G) being in an ON state, a signal from the second cooling terminal (Y2) being in an ON state, and a first cooling terminal (Y1) being in an ON state. That is, during an operation of the indoor fan and in response to the ON signals being output from the first and second cooling terminals, from the humidification/dehumidification terminal for controlling humidification/dehumidification, and from the four-way valve terminal for cooling/heating switching, the controller 110 may determine that a user desires powerful heating and determine the second communication signal as the strong heating wind (c).

In addition, the controller 110 may determine the second communication signal as a weak heating wind (d), based on a signal from the humidification/dehumidification terminal (Dh/H) being in an OFF state, a signal from the four-way valve terminal (O/B) being in an ON state, a signal from the second heating terminal (W2) being in an OFF state, a signal from the first heating terminal (W1) being in an OFF state, a signal from the indoor fan terminal (G) being in an ON state, a signal from the second cooling terminal (Y2) being in an OFF state, and a first cooling terminal (Y1) being in an ON state. That is, during an operation of the indoor fan and in response to the ON signals being output from the first cooling terminal and the four-way valve terminal for cooling/heating switching, the controller 110 may determine that a user desires weak heating and determine the second communication signal as the weak heating wind (d).

In addition, the controller 110 may determine the second communication signal as the weak heating wind (d), based on a signal from the humidification/dehumidification terminal (Dh/H) being in an ON state, a signal from the four-way valve terminal (O/B) being in an ON state, a signal from the second heating terminal (W2) being in an OFF state, a signal from the first heating terminal (W1) being in an OFF state, a signal from the indoor fan terminal (G) being in an ON state, a signal from the second cooling terminal (Y2) being in an OFF state, and a first cooling terminal (Y1) being in an ON state. That is, during an operation of the indoor fan and in response to the ON signals being output from the first cooling terminal, from the humidification/dehumidification terminal for controlling humidification/dehumidification and from the four-way valve terminal for cooling/heating switching, the controller 110 may determine that a user desires dehumidification with a weak heating setting and determine the second communication signal as the weak heating wind (d).

Thereafter, the controller 110 may transmit the determined second communication signal to the outdoor unit 20 through serial communication, and the outdoor unit 20 may operate in an operation mode corresponding to the second communication signal. In this instance, the controller 110 of the main controller 2 may convert the plurality of first communication signals into one second communication signal and transmit to the outdoor unit 20, thereby allowing the outdoor unit 20 communicating in a different manner from the indoor controller 10 to be compatible.

FIG. 7 illustrates a process of controlling a defrosting operation by the main controller according to an embodiment.

Referring to FIG. 7, the controller 110 of the main controller 2 may receive a plurality of first communication signals, which are contact signals, from the indoor controller 10, and may control functions, that may not be conventionally controlled with contact signals, by delaying or blocking a portion of the plurality of first communication signals.

The controller 110 of the main controller 2 according to an embodiment may receive an outdoor unit defrost signal from the outdoor unit 20 and enter a defrosting operation (a) based on the outdoor unit defrost signal. Upon receiving the outdoor unit defrost signal, the controller 110 may control signals of the first cooling terminal (Y1), the second cooling terminal (Y2), the first heating terminal (W1), the second heating terminal (W2), the four-way valve terminal (O/B), and the indoor fan terminal (G) to be in an OFF state.

In this instance, unlike the existing method, the controller 110 may change the indoor fan terminal (G) to an OFF state later than the other terminals by a preset time (b), and change the indoor fan terminal (G) to an ON state earlier than the other terminals by a preset time (c).

The defrosting operation is for removing frost caused by a drop in temperature around the outdoor unit 20, and corresponds to a process of melting the frost on a surface of the outdoor unit 20 according to a cooling operation principle. Accordingly, in response to entering the defrosting operation during the heating operation, the controller 110 may remove residual heat inside the air conditioner 1 by delaying the switching of the indoor fan signal (G) to an OFF state than other signals for efficient frost removal. Then, the controller 110 may operate the indoor fan in advance before the defrosting operation is finished (d), and discharge cold air in the air conditioner 1 in advance, thereby increasing the efficiency of the heating operation.

In another example, the controller 110 may delay or block the plurality of first communication signals received from the indoor controller 10 to provide a function of preventing cold air.

Specifically, in response to a user plugging in to operate a heating operation of the air conditioner 1, a frequency of the compressor is gradually increased, and thus air cooler than a set temperature may flow in at the beginning of operation. Accordingly, the controller 110 may control a signal of the indoor fan terminal (G) to be in an OFF state until a pressure of the compressor reaches a target pressure, thereby preventing cold air from being introduced at the beginning of the heating operation.

The air conditioner 1 according to an embodiment may provide a function of the indoor unit 30, that may not be provided in an existing contact-type air conditioner, thereby increasing user convenience.

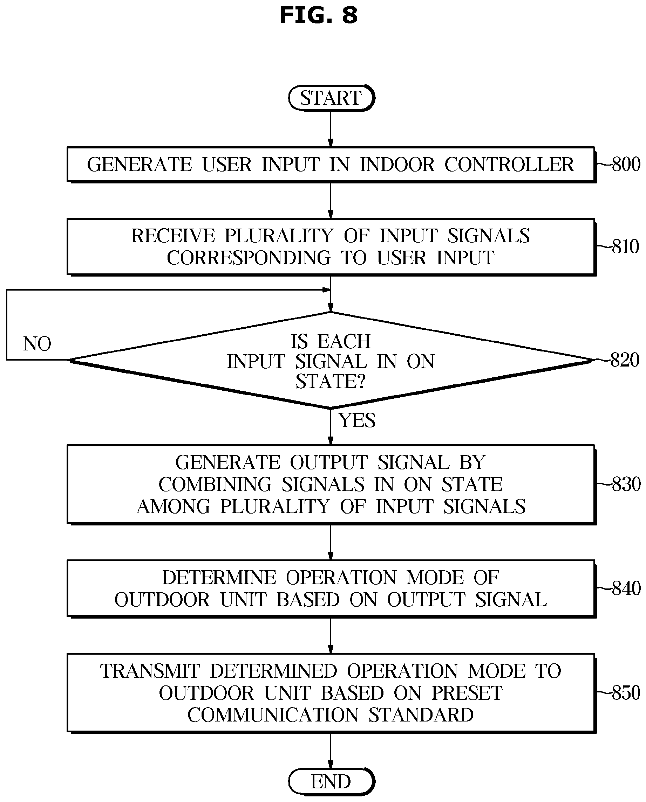

FIG. 8 is a flowchart illustrating operations of determining an operation mode of an outdoor unit by the main controller in the air conditioner according to an embodiment.

Referring to FIG. 8, a user may generate a user input including an operation command of air conditioner to the indoor controller 10 (800). Thereafter, the indoor controller 10 may transmit a plurality of first communication signals, which are a plurality of input signals corresponding to the user input, to the main controller 2, and the main controller 2 may receive the first communication signals (810).

Because the controller 110 generates a second communication signal by combining signals in an ON state from among the plurality of first communication signals, the controller 110 may determine whether each of the input signals is in an ON state (820).

Based on a determination that the input signals of the plurality of input signals are in an ON state (YES in operation 820), the controller 110 may generate an output signal, which is the second communication signal, by combining the input signals in an ON state from among the plurality of input signals (830).

Thereafter, the controller 110 may determine an operation mode of the outdoor unit 20 as any one of strong cooling wind, weak cooling wind, strong heating wind, or weak heating wind, based on the output signal (840). The controller 110 may transmit the determined operation mode of the outdoor unit 20 to the outdoor unit 20 based on a preset communication standard (850), thereby providing compatibility with a different type of outdoor unit 20 such as an inverter outdoor unit 20.

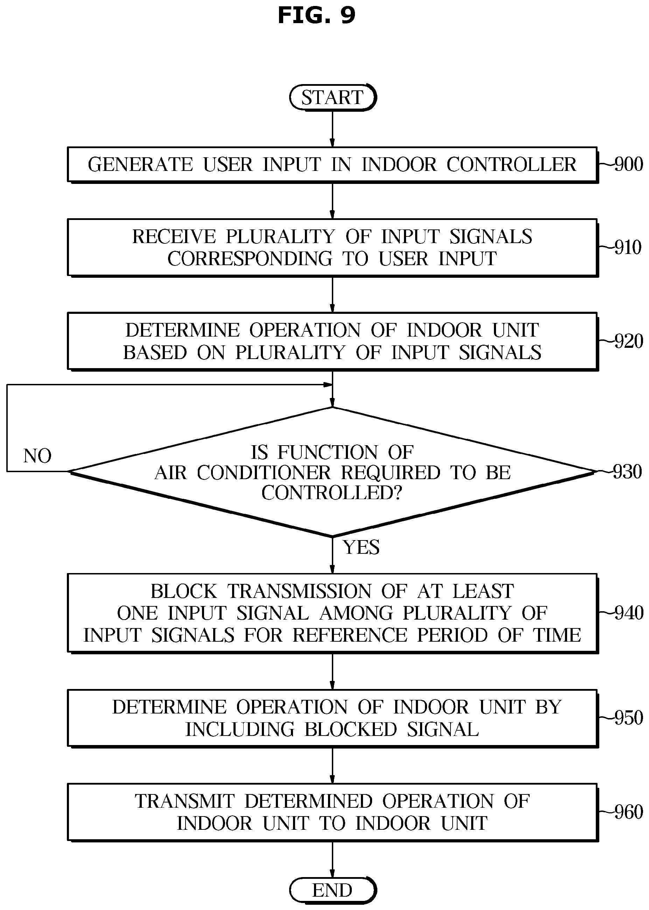

FIG. 9 is a flowchart illustrating operations of determining an operation of an indoor unit by the main controller in the air conditioner according to an embodiment.

Referring to FIG. 9, a user may generate a user input including an operation command of air conditioner to the indoor controller 10 (900). Then, the indoor controller 10 may transmit a plurality of first communication signals, which are a plurality of input signals corresponding to the user input, to the main controller 2, and the main controller 2 may receive the first communication signals (910).

Thereafter, the controller 110 of the main controller 2 may determine an operation of the indoor unit 30 based on the plurality of first communication signals (920). The controller 110 may determine a function control condition to determine whether a function of the air conditioner such as a defrosting operation or a cold air prevention function require to be additionally controlled (930).

Based on a determination that the function of the air conditioner require to be additionally controlled (YES in operation 930), the controller 110 may block and delay transmission of at least one input signal among the plurality of input signals for a reference period of time (940).

For example, as shown in FIG. 7, during the defrosting operation, a signal of the indoor fan (G) may be turned off later and turned on earlier than other signals, or the signal of the indoor fan (G) may be blocked for a predetermined period of time for cold air prevention.

The controller 110 may determine an operation of the indoor unit 30 by including the blocked signal (950), and may transmit the determined operation of the indoor unit 30 to the indoor unit 30 (960).

As described above, the air conditioner 1 according to an embodiment may convert the plurality of first communication signals into a single second communication signal, thereby allowing the inverter outdoor unit 20 to be connected to an existing constant speed-type air conditioner through the main controller 2. Accordingly, both compatibility of constant speed products and efficiency of inverter products may be acquired. Further, an air conditioner fan, auxiliary heat source, and other air conditioning devices may be controlled by delaying or blocking the first communication signal, thereby increasing user convenience.

The air conditioner 1 according to an embodiment may include the indoor controller 10 configured to receive an operation command from a user, and generate a plurality of first communication signals corresponding to the operation command. The air conditioner 1 may include the main controller 2 configured to receive the plurality of first communication signals by being connected to the indoor controller 10, and convert the plurality of first communication signals into a single second communication signal by combining the plurality of first communication signals. The air conditioner 1 may include the outdoor unit 20 configured to receive the single second communication signal by being connected to the main controller 2, and operate based on the single second communication signal.

The main controller 2 may be configured to combine signals in an ON state from among the plurality of first communication signals to convert into the second communication signal.

The plurality of first communication signals may include a contact communication signal, and the single second communication signal may include a serial communication signal communicable with the outdoor unit 20.

The main controller 2 may include a transmitting terminal configured to transmit the second communication signal to the outdoor unit 20, and a receiving terminal configured to receive an outdoor unit operation signal from the outdoor unit 20.

The main controller 2 may be configured to control the communicator 100 to perform bidirectional communication with the outdoor unit 20 through the transmitting terminal and the receiving terminal.

The main controller 2 may be configured to determine an operation of an indoor unit 30 based on the plurality of first communication signals, and control a communicator 100 to transmit the determined operation of the indoor unit 30 to the indoor unit 30.

The main controller 2 may be configured to block transmission of at least one first communication signal among the plurality of first communication signals for a reference period of time to determine the operation of the indoor unit 30.

The operation of the indoor unit 30 may include a plurality of operation stages, and the main controller 2 may be configured to determine, as the operation of the indoor unit 30, an operation stage corresponding to the plurality of first communication signals among the plurality of operation stages.

The apparatus for controlling the air conditioner 1 according to an embodiment may include the indoor unit connection terminal 31 configured to be connected to an indoor unit 30. The apparatus may include the outdoor unit connection terminal 21 configured to be connected to an outdoor unit 20. The apparatus may include an indoor controller connection terminal 11 configured to be connected to an indoor controller 10 configured to obtain an operation command from a user and generate a plurality of first communication signals corresponding to the operation command. The apparatus may include the controller 110 configured to convert the plurality of first communication signals into a single second communication signal, and transmit the single second communication signal to the outdoor unit 20.

The controller 110 may be configured to combine signals in an ON state from among the plurality of first communication signals to convert into the second communication signal.

The plurality of first communication signals may include a contact communication signal, and the single second communication signal may include a serial communication signal communicable with the outdoor unit 20.

The apparatus may further include a transmitting terminal configured to transmit the second communication signal to the outdoor unit 20, and a receiving terminal configured to receive an outdoor unit operation signal from the outdoor unit 20.

The controller 110 may be configured to control a communicator 100 to perform bidirectional communication with the outdoor unit 20 through the transmitting terminal and the receiving terminal.

The controller 110 may be configured to determine an operation of the indoor unit 30 based on the plurality of first communication signals, and control a communicator 100 to transmit the determined operation of the indoor unit 30 to the indoor unit 30.

The controller 110 may be configured to block transmission of at least one first communication signal among the plurality of first communication signals for a reference period of time to determine the operation of the indoor unit 30.

The operation of the indoor unit 30 may include a plurality of operation stages, and the main controller 2 may be configured to determine, as the operation of the indoor unit 30, an operation stage corresponding to the plurality of first communication signals among the plurality of operation stages.

According to the method for controlling the air conditioner 1 according to an embodiment, the indoor controller 10 may receive an operation command from a user, and generate a plurality of first communication signals corresponding to the operation command. The main controller 2 connected to the indoor controller 10 may receive the plurality of first communication signals, and convert the plurality of first communication signals into a single second communication signal by combining the plurality of first communication signals. The outdoor unit 20 connected to the main controller 2 may receive the single second communication signal from the main controller 2, and operate based on the single second communication signal.

According to a computer-readable recording medium storing a program for implementing a method for controlling an air conditioner, the indoor controller 10 may receive an operation command from a user, and generate a plurality of first communication signals corresponding to the operation command. The main controller 2 connected to the indoor controller 10 may receive the plurality of first communication signals, and convert the plurality of first communication signals into a single second communication signal by combining the plurality of first communication signals. The outdoor unit 20 connected to the main controller 2 may receive the single second communication signal from the main controller 2, and operate based on the single second communication signal.

Meanwhile, the disclosed embodiments may be implemented in the form of a recording medium that stores instructions executable by a computer. The instructions may be stored in the form of program codes, and when executed by a processor, the instructions may create a program module to perform operations of the disclosed embodiments.

The machine-readable recording medium may be provided in the form of a non-transitory storage medium, wherein the term 'non-transitory storage medium' simply means that the storage medium is a tangible device, and does not include a signal (e.g., an electromagnetic wave), but this term does not differentiate between where data is semi-permanently stored in the storage medium and where the data is temporarily stored in the storage medium. For example, a 'non-transitory storage medium' may include a buffer in which data is temporarily stored.

According to an embodiment of the disclosure, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloadable or uploadable) online via an application store (e.g., Play Store^{™}) or between two user devices (e.g., smartphones) directly. When distributed online, at least part of the computer program product (e.g., a downloadable app) may be temporarily generated or at least temporarily stored in the machine-readable storage medium, such as a memory of the manufacturer's server, a server of the application store, or a relay server.

While the disclosure has been particularly described with reference to exemplary embodiments, it should be understood by those skilled in the art that various changes in form and detail may be made without departing from the spirit and scope of the disclosure.

## Claims

1. An air conditioner 1, comprising:
an indoor controller 10 configured to receive an operation command from a user, and generate a plurality of first communication signals corresponding to the operation command;
and outdoor unit 20; and
a main controller 2 configured to connect to the indoor controller 10 and the outdoor unit 20, receive the plurality of first communication signals, convert the plurality of first communication signals into a single second communication signal by combining the plurality of first communication signals and transmit the single second communication signal to the outdoor unit 20 to control operation of the outdoor unit 20,
wherein the outdoor unit 20 is configured to receive the single second communication signal from the main controller 2, and operate based on the single second communication signal.

2. The air conditioner 1 of claim 1, wherein the main controller 2 is configured to combine signals in an ON state from among the plurality of first communication signals to convert the plurality of first communication signals into the single second communication signal.

3. The air conditioner 1 of claim 1, wherein the plurality of first communication signals include a contact communication signal, and
the single second communication signal includes a serial communication signal communicable with the outdoor unit 20.

4. The air conditioner 1 of claim 1, wherein the main controller 2 comprises a transmitting terminal configured to transmit the single second communication signal to the outdoor unit 20, and a receiving terminal configured to receive an outdoor unit 20 operation signal from the outdoor unit 20.

5. The air conditioner 1 of claim 4, wherein the main controller 2 is configured to control a communicator 100 to perform bidirectional communication with the outdoor unit 20 through the transmitting terminal and the receiving terminal.

6. The air conditioner 1 of claim 1, wherein the main controller 2 is configured to determine an operation of an indoor unit 30 based on the plurality of first communication signals, and control a communicator 100 to transmit the determined operation of the indoor unit 30 to the indoor unit 30.

7. The air conditioner 1 of claim 6, wherein the main controller 2 is configured to block transmission of at least one first communication signal among the plurality of first communication signals for a reference period of time to determine the operation of the indoor unit 30.

8. The air conditioner 1 of claim 7, wherein the operation of the indoor unit 30 includes a plurality of operation stages, and
the main controller 2 is configured to determine, as the operation of the indoor unit 30, an operation stage corresponding to the plurality of first communication signals among the plurality of operation stages.

9. An apparatus to control an air conditioner 1, the apparatus comprising:
an indoor unit connection terminal 31 configured to be connected to an indoor unit 30;
an outdoor unit connection terminal 21 configured to be connected to an outdoor unit 20;
an indoor controller connection terminal 11 configured to be connected to an indoor controller 10, the indoor controller 10 being configured to obtain an operation command from a user and generate a plurality of first communication signals corresponding to the operation command; and
a controller 110 configured to receive the plurality of first communication signals from the indoor controller 10, convert the received plurality of first communication signals into a single second communication signal by combining the received plurality of first communication signals, and transmit the single second communication signal through the outdoor unit connection terminal 21 to the outdoor unit 20 to control the outdoor unit 20.

10. The apparatus of claim 9, wherein the controller 110 is configured to combine signals in an ON state from among the plurality of first communication signals to convert the plurality of first communication signals into the single second communication signal.

11. The apparatus of claim 9, wherein the plurality of first communication signals include a contact communication signal, and
the single second communication signal includes a serial communication signal communicable with the outdoor unit 20.

12. The apparatus of claim 9, further comprising:
a transmitting terminal configured to transmit the single second communication signal to the outdoor unit 20; and
a receiving terminal configured to receive an outdoor unit 20 operation signal from the outdoor unit 20.

13. The apparatus of claim 12, wherein the controller 110 is configured to control a communicator 100 to perform bidirectional communication with the outdoor unit 20 through the transmitting terminal and the receiving terminal.

14. The apparatus of claim 9, wherein the controller 110 is configured to determine an operation of the indoor unit 30 based on the plurality of first communication signals, and control a communicator 100 to transmit the determined operation of the indoor unit 30 to the indoor unit 30.

15. The apparatus of claim 14, wherein the controller 110 is configured to block transmission of at least one first communication signal among the plurality of first communication signals for a reference period of time to determine the operation of the indoor unit 30.
